Europäisches Patentamt

**European Patent Office**

**Office européen des brevets**

(11) Publication number: **0 197 462**

**A1**

# (12) EUROPEAN PATENT APPLICATION

(21) Application number: **86104304.0**

(22) Date of filing: **27.03.86**

(51) Int. Cl.⁴: **G 01 D 5/24**

(30) Priority: **01.04.85 CN 85100991**

(43) Date of publication of application:
**15.10.86 Bulletin 86/42**

(84) Designated Contracting States:
**CH DE FR GB LI NL**

(71) Applicant: **XIAN INSTRUMENTATION FACTORY**
**Laodong Road**
**Xian(CN)**

(72) Inventor: **Wen, Lin**
**Xian Instrumentation factory Laodong Road**
**Xian(CN)**

(74) Representative: **Müller, Hans-Jürgen, Dipl.-Ing. et al,**
**Müller, Schupfner & Gauger Lucile-Grahn-Strasse 38**
**Postfach 80 13 69**
**D-8000 München 80(DE)**

(54) Capacitive position transducer.

(57) A capacitive position transducer for detecting position changes or producing position feed back signals in a servo recorder comprises a rhombic sender electrode (10) connected to a voltage source and a plurality of rectangular receiver electrodes (11–18) insulated from and adjacent to each other. Current flowing through the coupled transmitting and receiver electrodes is rectified by diodes circuits ($D_1$-$D_8$, $D'_1$-$D'_8$) and then flows through a serialconnected resistor circuit ($R_O$-$R_7$) thereby to form an output voltage signal at the ends of the resistor circuit. The linearity of the output voltage signal can be changed by changing the value of the resistor in the resistor circuit. The capacitive positive transducer can also provide the commutating signals required by brushless linear motor.

Fig 1

EP 0 197 462 A1

# CAPACITIVE POSITION TRANSDUCER

## BACKGROUND OF THE INVENTION

The present invention relates to a capacitive position transducer for detecting position changes, particulary, to a capacitive position transducer used for producing position feedback signals in a control system or in a recorder or detecting relatively long distance position changes in a device.

A well-known capacitive position transducer consisted of a pair of differential capacitor has two disadvantages: first, the shapes of the electrodes must meet the requirements of high accuracy; and second, the variation of the distance between electrodes would affect the output signal significantly, therefore, it is difficult to obtain high accuracy. There is another kind of capacitive position transducer [Patent Application No. JP-A-112769 (昭 53)], in which arbitrary nonlinearity is obtained by an additional voltage divider. Also, it has following shortcomings: voltage divider with either resistors or capacitors is influenced by parasite capacitors, therefore, it is necessary to adjust an adjustable devices to implement an exact voltage dividing. The other shortcomings are the same as the differential capacitive position transducer, namely, it is sensitive to the variation of the shapes of and distance between the electrodes. As a result, it is difficult to attain an accurate detection.

Linear motor, particularly, brushlesslinear motor (linear motor with electionic commutator) is the most desirable servo motor in a electronic servo recorder.

However, the brushless linear motor needs a commutating signal, and the using of commutator will increase the complexity of the device significantly. That forms the main obstacle to the application of brushless linear motor in recorder.

## SUMMARY OF THE INVENTION

The above-mentioned drawbacks are overcomed by the present invention.

This capacitive position transducer according to the present invention comprises a capacitive sensing means which includes a first electrode connected to a high frequency voltage source and a plurality of second electrodes insulated from and closely adjacent to each other to form an aligned configuration, wherein the first and second electrodes are arranged to face each other and the first electrode is moveable along the aligned configuration of the second electrodes; a plurality of pairs of diodes with the anode of one of each pair of diodes being connected to the cathode of the other diode to form a junction thereby, and the other two terminals of each pair of diodes being refered to as first and second terminals respectively, all the first terminals of the pairs of diodes being of the same polarity, and so being all the second terminals; and a first network means comprising a plurality of serially connected resistors with a plurality of junction formed therebetween, each junction corresponding to one of second electrodes sequenicially, one end of the first network means being connected to a reference point and the other end being used as the output terminal.

Each of the first terminals of the pairs of diodes is connected to a corresponding junction of the first network means; each of the second terminals of the pairs of diodes is connected to the reference point, and each of the junctions of the pairs of diodes is connected to a corresponding second electrode. As the first electrode is moved along the aligned configuration of the second electrodes, currents will be flowing through the coupled first and second electrodes, rectified by corresponding diodes and then flowing through corresponding junctions and resistors of the first network means thereby to form a total voltage drop signal related to the relative position between the first and second electrodes which is output at the output terminal of the first network means,

In addition, the second terminals of the pairs of diodes can be connected to a second network means. The commutating signals required by brushless linear motor can be obtained from the second network means.

It is the first object of the present invention to improve the accuracy of the detection of the capacitive position transducer without enhanced requirements for high machining precision during the manufacturing of the transducer and at the same time to achieve a high accuracy of nonlinear output characteristics. In addition, it is also intended to improve the reliability and environment immunity of the present transducer so that to reach a high cost-effectiveness.

It is another object of the present invention to provide a new technique for producing commutating signals by transducer itself, which makes the use of brushless linear motor more economic in recorder or other controll systems.

## BRIEF DESCRIPTION OF THE DRAWINGS

FIG.1 shows the first embodiment of the invention;

FIG.2 shows the second embodiment of the invention;

FIG.3 shows the third embodiment of the invention;

FIG.4 shows the fourth embodiment of the invention;

FIG.5 shows the fifth embodiment of the invention;

FIG.6 shows the sixth embodiment of the invention;

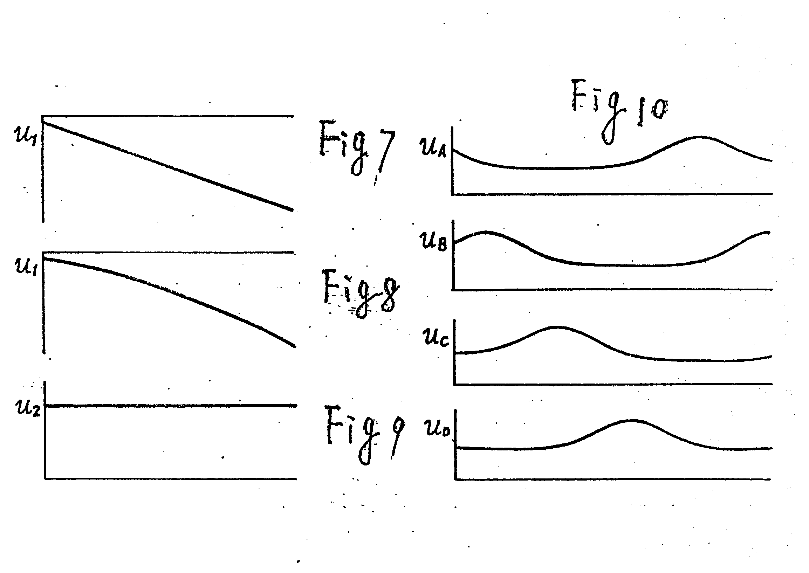

FIG.7 shows the graph of the output voltage signal $U_1$ of linear characteristics for the first embodiment;

FIG.8 shows the graph of the output voltage signal $U_1$ of nonlinear characteristics for the first embodiment;

FIG.9 and 10 show the output voltage signals $U_2$ and $U_3$ respectively.

## DETAILED DESCRIPTION OF CERTAIN
## PREFERRED EMBODIMENTS

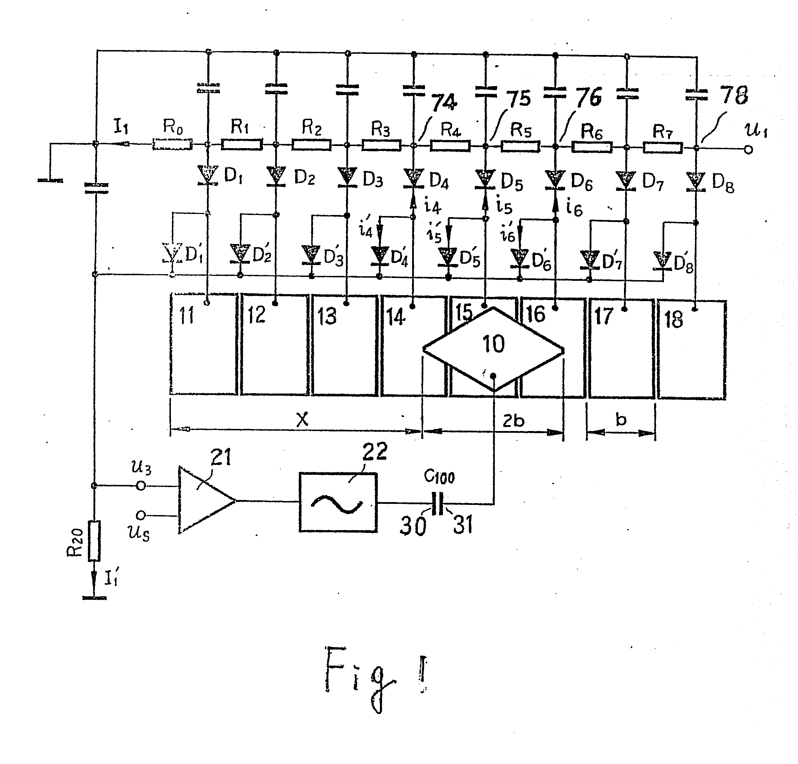

FIG.1 shows the first embodiment of the capacitive position transducer according to the present invention. The capacitive sensing means for position measuring is composed of a first electrode 10, used as a sender electrode and a plurality of second electrades 11,12,13, 14,15,16,17, and 18, used as a receiver electrode, which are insulated from and closely adjacent to each other. The first network means is composed of several

resistors $R_0, R_1, R_2, R_3, R_4, R_5, R_6$ and $R_7$ in series, one lead of resistor $R_0$ is connected to circuit ground, all the junctions of the resistors are separatly connected to capacitors whose other leads are connected to circuit ground. The second network means is a grounded resistor $R_{20}$ in parallel with a capacitor.

The second electrode 14 is connected to the cathode of the diode $D_4$, the anode of which is connected to the junction 74 of the first network means. The electrode 14 is also connected to the anode of the diode $D_4'$, the cathode of which is connected to resistor $R_{20}$. The above circuit is repeated for each of the second electrodes.

When high frequency voltage is introduced to the first electrode, an AC current which is caused at the several second electrodes coupling with the first electrode, is rectified into two DC currents, one of which flows from corresponding junctions through first network means to ground, the others flows through $R_{20}$ to ground. An output signal $U_1$ as a function of position to be measured is produced at the terminal 78.

Because DC current can not pass through capacitor, so a DC current can not flow from electrode 14 to electrode 10. For instance, the mean value of current $i_4$ flowing through $D_4$ is equal to means value of current $i_4'$ flowing through $D_4'$ but they flow only with opposite direction. Then the total current $I_1$, flowing through first network means is always equal to opposite directional current $I_1'$ flowing through $R_{20}$. The votage drop across

$R_{20}$ ie. output signal $U_3$ associated with the total current $I_1$ is obtained and compared with the constant voltage $U_s$ at the input terminals of the amplifier 21. The output of amplifier 21 controls the amplitude of high frequency voltage output of oscillator 22. As a result, the total current $I_1$ flowing through the first network means is controlled to constant value. The total current $I_1$ does not change with any external variations such as change in space between first and second electrodes, variation of parameters of electronic components for oscillator and various conditional variations caused by ambient condition. The all above mentioned variations would be compensated by the variation of amplitude of HF-voltage of oscillator's output.

At any time there are only a few junctions of first network means injected with current drawn from several second electrodes, becouse the first electrode is only coupled with a limited number of second electrodes. When the first electrode is moved, in the view of circuit analysis, it is equiralent to the change of the value of resistance, through which the total current $I_1$ passes and there is no change in total current $I_1$. If the first network means is made up of resistors with same value except $R_0$, the output characterstic is linear. If the first network means is made up of unequal value resistors, the output characteristic is nonlinear. If the shape of both first and second electrodes are rectangular, the output characteristic is a smooth straight line only under the case of linear output. In the case of nonlinear output, output characteristic curve is made up of several broken lines, whose sections equals to the number of the resistors of the first network means. If the first electrode is rhombic and the second electrodes are rectangular, regardless of the linear and nonlinear output characteristic curves all are smooth. Therefore, rhombic first electrode is prefered. The length of diagonal of rhombic first electrode in moving direction approximately equal to even multiples of the centre distance between several second electrodes which are strid across by one resistor of the first network means.

When first electrode in Fig.1 is moved to the right, the relationship between output $U_1$ and position X is:

$$U_1 = I_1 \left[ \sum_{k=0}^{n} R_k + \frac{1}{2} R_{n+1} + \frac{1}{b} R_{n+1} (X - nb) + \frac{1}{2b^2} (R_{n+2} - R_{n+1})(X - nb)^2 \right] \qquad (1)$$

where $I_1$ is the total current flowing through the grounded end of the first network means, b is the width of each second electrode is the second electrodes coverd by the first electrode, and is a positive integer $0, 1, \ldots.$

Whenever output is linear, i.e. $R_{n+1} = R_{n+2} = R_{n+3} \cdots \cdots$

$$U_1 = I_1 \left[ \sum_{k=0}^{n} R_k + \frac{1}{2} R_{n+1} + \frac{1}{b} R_{n+1} (X - nb) \right] \qquad (2)$$

When $R_{n+1} \neq R_{n+2} \neq R_{n+3} \cdots \cdots$, the output characteristic is nonlinear as shown in (1), but the differential

quotient of $U_1$ to X is linear as following:

$$\frac{d}{dx} U_1 = I_1 \left[ \frac{1}{b} R_{n+1} + \frac{1}{b^2} (R_{n+2} - R_{n+1})(x - nb) \right] \qquad (3)$$

It is approximatly fitted with the required curve in variation of curvature. As a result, it is a smooth curve.

If first electrode 10 is at position shown in Fig.1, where it is coupled with second electrodes 14,15, and 16, three DC currents $i_4$, $i_5$ and $i_6$ are derived. These currents go into ground from junctions 74, 75 and 76 respectively via resistors $R_5, R_4, R_3, R_2, R_1$ and $R_0$. At this time, the current flowing through $R_3$ to $R_0$ is the total current $I_1$, which is equal to the sum of $i_4$, $i_5$ and $i_6$. Herein, the DC current in $R_5$ is $i_4$ and the DC current in $R_4$ is the sum of $i_6 + i_5$. The output voltage $U_1$ outputing at terminal 78 is equal to the sum of all voltage drops accross the resistors. If the first electrode is moved to the right, $i_4$ will be gradually reduced, $i_5$ will be increased or reduced slightly and $i_6$ will be gradually increased. Consequently, the currents in $R_4$ and $R_5$ are increased, but the total current $I_1$ flowing through $R_3$ to $R_0$ remains unchanged. The sum of the voltage drops across $R_5$ to $R_0$, of course, will be increased and $U_1$ will be changed with the position variation of the first electrode. The resistor $R_0$ of the first network means is only used for determing the voltage of the start point, it does not affect the range of measurement and the linearity of the output characteristic.

So long as the total current $I_1$ is controlled

in constant, the accuracy of the output signal will only be affected by the accuracy of the distribution ratio between $i_4$, $i_5$ and $i_6$ but not by the sum of them. Hence, the variation of distance between second and first electrode without rotation cannot affect the above mentioned distribution ratio.

A large portion of output $U_1$ is voltage drop across severol resistors which total current $I_1$ flows through in this case as shown in Fig.1, these resistors are $R_3$ to $R_0$. The error of said voltage drop does not depend upon the relative position of first and second electrodes, and the said relative position can only influence the voltage drops across resistors $R_4$ and $R_5$ to be strid across the coupled second electrodes 14,15, and 16, and the voltage drops across resistors $R_4$ and $R_5$ take a very small portion of the max. value of output $U_1$. Therefore the high accuracy of position output is easy obtained. As shown in Fig.1, all positive rectified currents $i'_4$, $i'_5$ and $i'_6$ are summed up as $I'_1$ which passes through $R_{20}$. $I'_1$ is always equal to $I_1$ in magnitude and opposite to $I_1$ in direction.

In practice, the affects caused by positive voltage drop and junction capacitance of diodes can be reduced, because the high frequency voltage amplitude is much larger than the positive voltage drop of a diode.

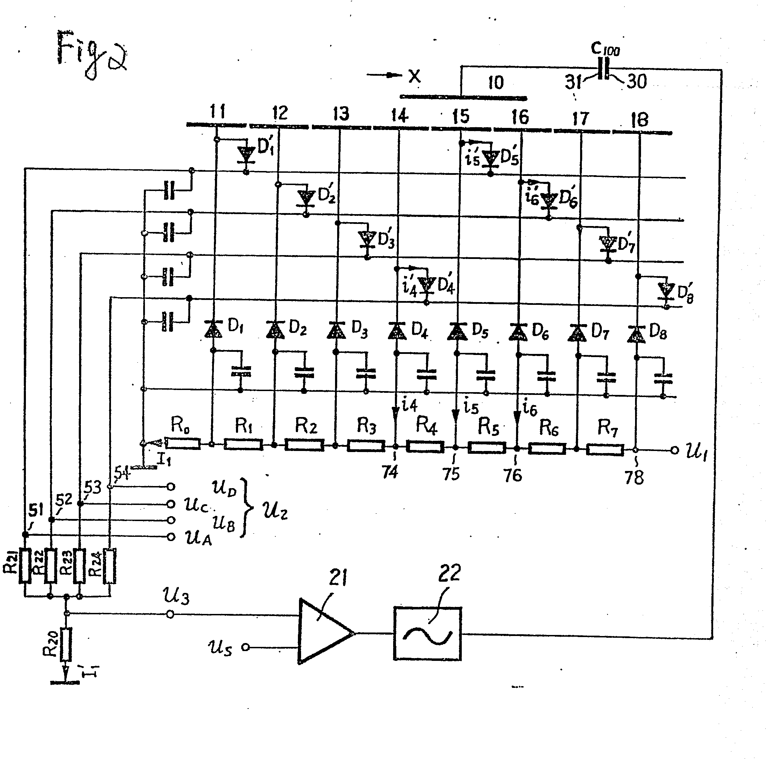

The second embodiment is shown in Fig.2, which can produce from the second network means commutating sighals. The second network means is composed of resistors $R_{21}$, $R_{22}$, $R_{23}$, and $R_{24}$ with a first and second ends,

the second terminals of all pairs of diodes being sequentially connected to the first ends of resistors $R_{21}, R_{22}, R_{23}, R_{24}$ with a period of the number of the resistors in the second network.. The second ends of these resistors are connected to the circuit ground through the resistor $R_{20}$. The output signal $U_2$ is obtained by adding the signal $U_3$ with the voltage drop produced by the recitified currents $i'_4$, $i'_5$ and $i'_6$ vi'a separately the resistors $R_{21}$, $R_{22}, R_{23}$, and $R_{24}$. Since the second electrodes are equally interlaced spacially, several output signals $U_A, U_B, U_C$ and $U_D$ are formed by the sum of an alternating voltage component with certain spacial coordinate related phase difference and a direct voltage component with the constant amplitude. If there are a brushless linear motor and this transducer used in a device, at this time the trabsdycer plays the same role as a commutator. When N commutating signals are required, the number of resistors in the second network should be equal to N.

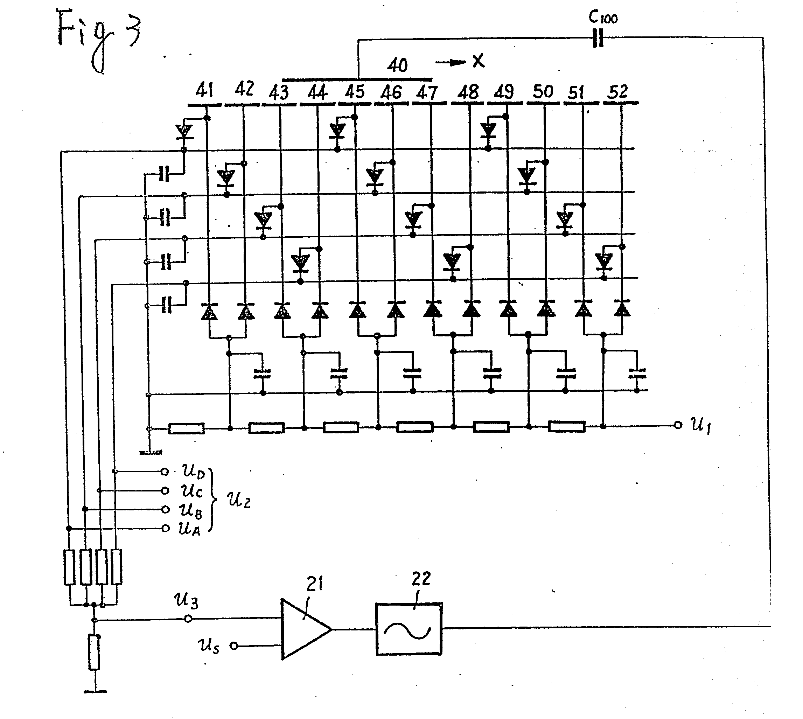

The third embodiment of the present invention is shown in Fig.3, which meets the requirements of a brushless linear motor for reducing the commutating period. The number of second electrodes may be equal to that of the junctions of the first network means or multiples of the some. In Fig.3, the number of the second electrodes is twice as many as the junctions of the first network means. Hence, the variation period of output signal $U_2$ is reduced to half of the original one, so that to meet the requirements of a brushless linear motor for reducing the commutating period to

0197462

a half. In this case, the length of the first electrode 40 is four times as wide as the second electrode, since each resistor except $R_0$ must be connected across these two pairs of electrodes.

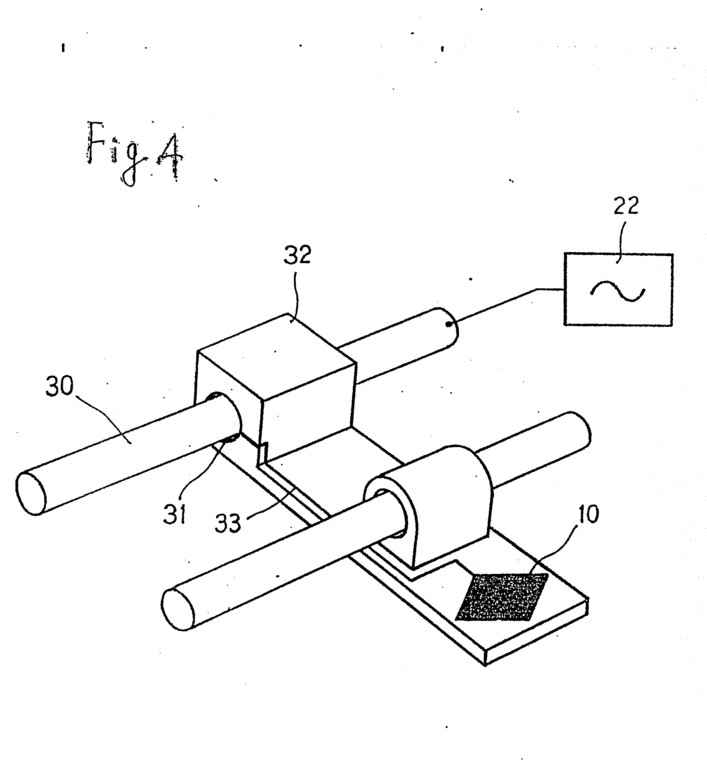

The fourth embodiment is shown in Fig.4, which can save a wire for introducing HF-voltage to the mobile first electrode. The HF-voltage being applied to a supporting axle 30, and a conductive layer lined on the inner wall of sleeve 32 in a insulated mobile cartridge, a capacitor $C_{100}$ is formed therebetween. The HF-voltage through $C_{100}$ and a piece of conducting wire goes to the first electrode 10.

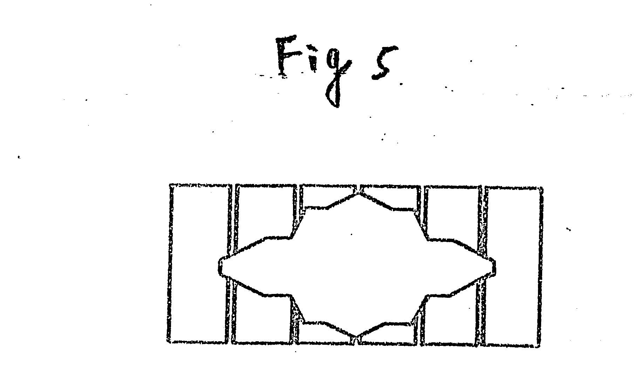

The fifth embodiment is shown in Fig.5 When the end of diagonal in moving direction of the first electrode is moved from on of second electrodes to the other one, certain error occurs due to the delayed conducting of the diodes. To solve this problem, both ends should be slightly enlarged and prolonged. In the third embodiment, because two or more rectified currents from second electrodes flows into one junction of first network mean, it then be causes error, which cannot be completed solved by enlarging and prolonging two ends. As a result, a modified region should be added at a certain position, i.e. one width of second electrode from symmetric centre line of the first clectrcde in moving direction, and at rhombic two edges or four edges. Modified region consists of three sections of broken line, which plays the same roles as locally increasing the slop of rhombic edges.

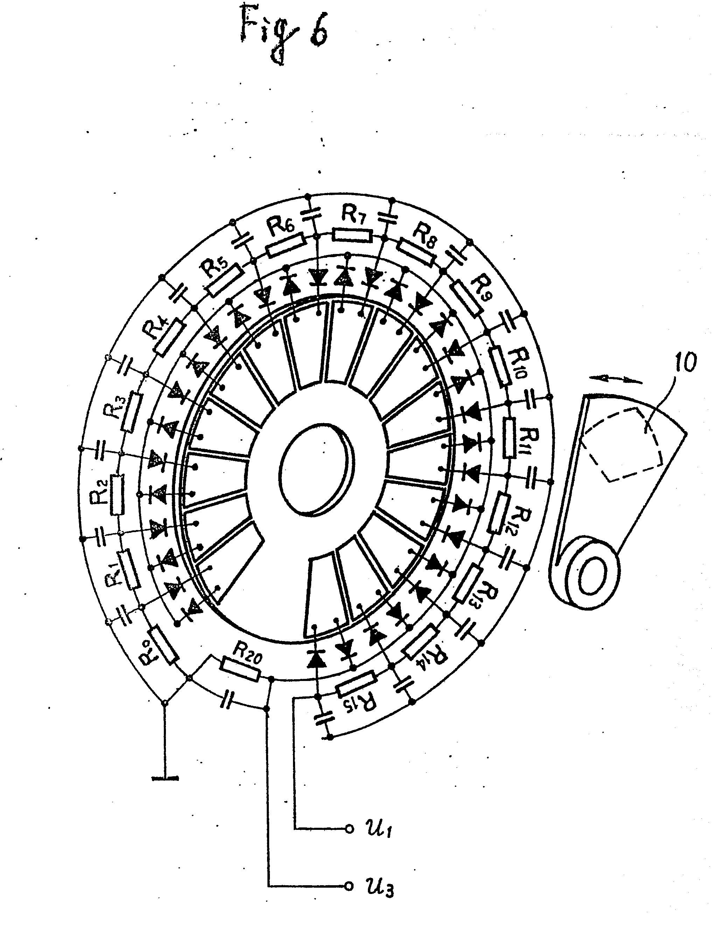

The sixth embocliment is shown in Fig.6, where sectrorial second electrodes may cover whole circumference.

The advantages of this invention are as follows:

(1) Due to the fact that the first network means are used to sum up output signals from each second electrode in this invention, as long as total current remains invariant, the absolute error does not increase with the number of second electrodes and the relative error is inversely proportional to the number of second electrodes. Then position output signal with high accuracy is obtained by increasing the number. (2) The transducer in this invention may provide output signal $U_3$, by which the closed loop control system makes total current invariant. As a result, the variant of the distance between first electrode and second electrodes is allowed. It means that the requirements for flatness of second electrodes and straightness of supporting axla reduce (3) The variations of characteristic of most electronic components and deformation of parts, due to the enviroments influence, which may affect the total current $I_1$, present no hazard. As such, the transducer of this invention has greatly enhanced the immunity of enviroment influence. (4) Because total current is a constant volue, it is possible to exploit the capacitor, comprisecd of supporting axle and its sleeve with inner conductive liner, to conduct HF-voltage. However the capacitance of the capacitor is uncertainly, but it has no influence on the total current $I_1$. As a result, the wire for feeding to first electrode is eliminated. (5) when the transducer of this invention is under operation, there is only a few second electrodes coupled with first electrode and then the HF-current passes through them. Therefore, only these diodes connected to second electrodes are turned on, all the others are turned off. It is impossible to introduce the received interference signals from other second electrodes into first network means. As a result, the signal to noise ratio is very high. It is a very important advantage for a servo system with deep feedback. It is allowed to adopt serial derivative feedback, which is not permitted to be used in a general servo system, to suppress the generation of system self-oscillation. Serial derivative feedback is an indispensable measure for the stable operation of a brushless linear motor in a high speed servo system. It is just the very large signal to noise ratio, and the commutating signal can easy be obtained in position transducer of the present invention, that make the application of brushless linear motor in recorder possible and to have obvious economic gain.

(6) The total current $I_1$ being a DC current via first network means and being stabilized, each resistor's value can be precalculated exactly, according to required nonlinearity, such as calibrated dial table of thermocouple. It is not required to have any experimented data and adjustment in assembly process. Therefore, the process of manufacturing recorder becomes more convenient.

What is claimed is:

1. A capacitive position transducer, comprising

a capacitive sensing means which includes a first electrode connected to a high frequency voltage source and a pluality of second electrodes insulated from and closely adjacent to each other to form a aligned configuration, wherein said first and second electrodes are arranged to face each other and said first electrode is moveable along said aligned configuration of said second electrodes;

a plurality of pairs of diodes with the anode of one of each pair of diodes being connected to the cathode of the other diode to form a junction thereby, and the other two terminals of each pair of diodes being refered to as first and second terminals respectively, all the first terminals of the pairs of diodes being of the same polarity, and so being all the second terminals; and

a first network means comprising a plurality of serially connected resistors with a plurality of junction formed therebetween, each said junetion corresponding to one of second electrodes sequencially, one end of the first network means being connected to a reference point and the other end is used as the output terminal;

characterized in that each of the first terminals of said pairs of diodes is connected to a corresponding junction of said first network means; each of the second terminals of said pairs of diodes is connected vi'a a second network means to said reference point;

-2-

and each of the junction of said pairs of diodes is connected to a corresponding second electrode; wherein as said first electrode is moved along the aligned configuration of said second electrodes, currents will be flowing through the mutual-coupled first and second electrodes, recitified by corresponding diodes and then flowing through corresponding junction and resistors of said first network means thereby to form a total voltage signal related to the relative position between said first and second electrcdes, which is output at said output terminal of said first network means.

2. The transducer according to claim 1, also comprises a closed-loop control system which contrals the total current flowing through the first network means and then makes it be a constant.

3. The transducer according to claim 2, in which the closed-loop control system comprises an amplitier and a high frequency voltage oscillator, the output of the amplifier controling the amplitude of output of said high frequency oscillator, the input signal at said amplifiter being related to said total current, and the output of said high frequency oscillater be sent to said first electrod.

4. The transducer according to claim 1, in which the shape of the first electrode is substantially rnombic one.

5. The transducer according to claim 4, in which the digonal length of the above substantially rhombic first electrode in the moving direction is approximately even multiples of the distance between centers of the second electrodes crossed by one resistor in the first network means.

6. The transducer according to claim 5, in which the ends of the substantially rhombic first electrode along with the moving direction are modified slightly, enlarged and prolonged thereby to reduce the error caused by transition from one of second electrodes to the other one.

7. The tranducer according to claim 6, in which, if the number of second electrodes is equal to the multiples of the number of said junctions in the first network means, a modified regions are determined at the edges of said substantially rhombic first electrode and the slope of the edges in the regions is increased, the distance between the centre of the modified region and the symmetric centre line of first electrode along the moving direction being equal to the width of one of second electrodes so as to reduce the erron caused by the transition from one of second electrodes to the other one.

8. The transducer according to claim 1, in which a high frequency voltage is applied to a long supporting axle and introduced to the mobile first electrode trough a capacitor formed by said axle and the conductive layer lined on the inner wall of a sleeve.

9. The transducer according to claim 1, in which the relationship between said output voltage signal and said relative position changes into nonlinear one from linear one by changing the value of said resistors in the first network means.

01.97462

10. The transducer according to claim 1, in which the second network means is a conductive wire.

11. The transducer according to claim 1, in which the second network means is at least a resistor.

12. The transducer according to claim 1, in which the second network means has N resistors with a first and a second ends, the second terminals of all pairs of diodes being sequentially connected to the first ends of N resistors with a period of N, the second ends of N resistors being connected to said reference point through a third network means thereby to produce from first ends of N resistors commutating signals required by brushless linear motor.

13. The transducer according to claim 12, in which the third network means is a conductive wire.

14. The transducer according to claim 12, in which the third network means is at least a resistor.

Fig 1

0197462

Fig 2

Fig 3

3/7

0197462

Fig 4

Fig 5

Fig 6

0,197462

6/7

10

$U_1$

$U_3$

— 6 —

Fig 7

Fig 8

Fig 9

Fig 10

## DOCUMENTS CONSIDERED TO BE RELEVANT

EP 86104304.0

| Category | Citation of document with indication, where appropriate, of relevant passages | Relevant to claim | CLASSIFICATION OF THE APPLICATION (Int. Cl.4) |
|---|---|---|---|
| A | DE - A - 2 324 472 (ALLIS-CHALMERS CORP.)<br>    * Fig. 1 *<br>-- | 1 | G 01 D   5/24 |
| A | EP - A1 - 0 053 091 (MEYER)<br>    * Fig. 1 *<br>-- | 1 | |
| A | PATENT ABSTRACTS OF JAPAN, unexamined applications, section E, vol. 2, no. 145, December 4, 1978<br>THE PATENT OFFICE JAPANESE GOVERNMENT<br>    * Page 9166 E 78, kokai-no. 53-112 769 * | 1 | |
| D | & JP-A-53-112 769<br>---- | | |

### TECHNICAL FIELDS SEARCHED (Int. Cl.4)

B 23 Q 16/00
B 24 B 47/00
B 24 B 49/00
G 01 B  7/00
G 01 D  5/00
H 02 K 24/00
H 02 K 29/00

The present search report has been drawn up for all claims

| Place of search | Date of completion of the search | Examiner |
|---|---|---|
| VIENNA | 20-06-1986 | KUNZE |